# EUROPÄISCHE PATENTSCHRIFT

(11) **EP 4 033 139 B1**
(45) Veröffentlichungstag und Bekanntmachung des Hinweises auf die Patenterteilung: **06.11.2024**
(21) Anmeldenummer: 21020626.4
(22) Anmeldetag: 08.12.2021
(51) Int. Cl.: F16L 55/10, F16K 1/00, F16K 3/06, F16K 3/08

(54) **ABSPERRVORRICHTUNG IN EINEM ROHR**
SHUT-OFF DEVICE IN A PIPE
DISPOSITIF D'ARRÊT DANS UN TUBE

(30) Priorität: 22.01.2021 DE 202021100308 U
(43) Veröffentlichungstag der Anmeldung: 27.07.2022
(73) Patentinhaber: Fr. Jacob Söhne GmbH & Co. KG, 32457 Porta Westfalica (DE)
(72) Erfinder: Detweiler, Mario, 16775 Gransee (DE)
(74) Vertreter: Dantz, Jan Henning

(56) Entgegenhaltungen:
- EP-A1- 3 705 779
- EP-A2- 0 195 178
- WO-A1-2012/117222
- WO-A1-2015/176129
- WO-A1-90/09537
- DE-A1- 19 821 648
- DE-A1- 2 058 217
- DE-B3- 102014 107 446
- US-A1- 2020 300 402

## Beschreibung

Die vorliegende Erfindung betrifft eine Absperrvorrichtung zum Unterbrechen eines Strömungsweges in einem Rohr mit wenigstens einem ersten Rohranschlussstück, mit einem ersten Strömungsquerschnitt, mit einer Verschlusseinrichtung, die zwischen einer Öffnungsstellung, in welcher der Strömungsweg frei ist, und einer Schließstellung, in welcher der Strömungsweg versperrt ist, bewegt werden kann, wobei die Verschlusseinrichtung um eine Drehachse radial drehbar gelagert ist, die im Wesentlichen mit einer Längsachse des ersten Rohranschlussstücks zusammenfällt und einen um eine Absperrwand reduzierten zweiten Strömungsquerschnitt aufweist, wobei der erste Strömungsquerschnitt in der Öffnungsstellung mit dem zweiten Strömungsquerschnitt wenigstens teilweise fluchtet und in der Schließstellung durch die Absperrwand versperrt ist.

Eine solche Absperrvorrichtung ist zum Beispiel als Klappe oder Schieber in Rohren bekannt, um im Falle eines Brandes das Rohr schnell zu sperren. Es gibt aber auch viele andere Gründe, um Rohre in einem Rohrsystem schnell schließen zu können.

So ist zum Beispiel aus DE 198 21 648 A1, gemäß der Präambel von Anspruch 1, eine manuell verstellbare Durchflussdrossel bekannt, bei der zwei Drosselscheiben in einem drucklosen Zustand bei gelockerten Flanschen gegeneinander verdrehbar sind, um eine Durchflussöffnung zu verkleinern oder zu vergrößern. Die in Rohren eingesetzten Drosselscheiben müssen aus einer Öffnungsstellung, in der ein Strömungsquerschnitt des Rohres von einem Medium frei durchströmt werden kann, in eine Drosselstellung gebracht werden, in welcher der Strömungsquerschnitt des Rohres wenigstens teilweise verschlossen und der Strömungsweg des Mediums wenigstens teilweise versperrt ist.

Aus US 2020/0300402 A1 ist eine automatische Drosseleinrichtung für eine Sprinkleranlage bekannt. Auch diese weist zwei sich relativ zueinander verdrehende Scheiben mit Öffnungen auf. Eine fächerartige Struktur im Strömungsweg des Wassers ist so ausgebildet und eingestellt, dass die fächerartige Struktur beim Überschreiten einer Wassermenge in Drehung versetzt wird und die Öffnungen und somit den Strömungsweg versperrte. Eine wahlfreie Versperrung insbesondere auf manuellem Wege ist nicht vorgesehen.

Aus DE 20 58 217 A1 ist eine Lüftungsanordnung zum Belüften von Räumen bekannt, die ein ventilartiges Regulierorgan umfasst. Das ventilartige Regulierorgan kann vor der Inbetriebnahme so eingestellt werden, dass die Öffnungsweite den in den jeweiligen Leitungen zu erwartenden Druckverhältnissen entspricht. Zum Einstellen oder Verstellen der Öffnungsweite muss eine Schraube mechanisch gelöst werden, um dann mit Hilfe einer Skala die Öffnungsweite druckabhängig verstellen zu können. Anschließend muss die Schraube wieder angezogen werden. Ein Einstellen oder Verstellen im laufenden Betrieb, um bei einem Notfall manuell eingreifen zu können, ist nicht möglich.

Aus WO 90/09537 A1 ist ein Hauptabsperrventil bekannt. Dieses Hauptabsperrventil ist so konstruiert, dass dieses unter Vermeidung einer Schnellschlusswirkung allmählich geschlossen wird, um die beim Schließvorgang notwendig auftretenden Übergänge von einer dynamischen Belastung der Rohrleitung und deren Anschlussteilen zu einer statischen Belastung zu beherrschen und bis zum Platzen der Rohrleitungen führende Wasserschläge zu vermeiden. Das Hauptabsperrventil ist so konstruiert, dass eine langsame Absperrung leichtgängig durchgeführt werden kann. Eine schnelle Absperrung im Notfall ist mit diesem Hauptabsperrventil nicht möglich.

Aus EP 0 195 178 A2 ist ein Durchgangs- und Absperrventil bekannt. Dieses umfasst drei parallel angeordnete Scheiben mit jeweils gleichen Durchlassöffnungen, wobei die Durchlassöffnung der mittleren Scheibe entweder mit der Durchlassöffnung der einen äußeren Scheibe oder der anderen äußeren Scheibe eine kommunizierende Verbindung herstellt. Dadurch wird verhindert, dass im Ventilraum ein durch in diesem eingesperrtes Wasser Überdruck entstehen kann.

Die Rohre für eine Absperrvorrichtung gemäß vorliegender Erfindung sind häufig Teile von Industrieanlagen, Werkstätten oder anderen Betriebsstätten, in denen die Umgebung staubbelastet ist, so dass sich die Gelenke oder die Gleitführungen einer Absperrvorrichtung über die Zeit mit Verunreinigungen aus der Umgebung zusetzen und den sicheren Betrieb der Absperrvorrichtung behindern. Bei einer manuellen Betätigung kann das Betriebspersonal eine Grobreinigung durchführen, wobei das ein schnelles Absperren dennoch verhindert. Bei motorischen Verschließtechniken, die aus der Ferne gesteuert werden, führen aber Verunreinigungen in den Bewegungseinrichtungen der Absperrvorrichtungen dazu, dass diese nicht richtig oder unter Umständen auch gar nicht schließen.

Die Aufgabe der vorliegenden Erfindung ist daher, eine Absperrvorrichtung der eingangs genannten Art derart weiterzubilden, dass ein schnelles Verschließen unabhängig von einer verunreinigten Umgebung sichergestellt ist.

Die Aufgabe wird erfindungsgemäß dadurch gelöst, dass die Verschlusseinrichtung im Wesentlichen als ein Rohrstück ausgebildet ist, dessen Drehachse auch mit der Längsachse des Rohrstücks zusammenfällt, wobei an dem Rohrstück eine Stelleinrichtung angeordnet ist, mit der das Rohrstück während eines laufenden Betriebs um die Drehachse in Drehung versetzt werden kann.

Die Verschlusseinrichtung gemäß vorliegender Erfindung hat den Vorteil, dass eine radiale Lagerung gegenüber der Umgebung geschlossen ausgebildet werden kann und daher weitestgehend unbeeinflusst von der Umgebung ist. Eine radiale Lagerung ist somit nicht der Gefahr einer übermäßigen Verunreinigung ausgesetzt. Die im Rahmen der vorliegenden Erfindung neue Schließ- und Öffnungsbewegung durch Drehung der Verschlusseinrichtung, derart, dass eine Absperrwand in der Öffnungsstellung einen Strömungsquerschnitt freigibt und in Schließstellung den Strömungsquerschnitt verschließt, ermöglicht eine Bauweise, bei der das Risiko einer Verschmutzung der an einer Bewegung beteiligten Bauteile nur noch sehr gering ist.

Ein weiterer Vorteil der vorliegenden Erfindung ist, dass die Verschlusseinrichtung vorzugsweise ein Gleitlager, ein Wälzlager oder ein Magnetlager sein kann. Dadurch kann je nach Anwendungsgebiet das geeignete Lager ausgewählt werden. Für die erfindungsgemäße Drehbewegung der Verschlusseinrichtung ist es günstig, dass die Verschlusseinrichtung radial, zum Beispiel an einem Umfangsflansch eines Anschlussrohrs, als Gleitlager, Wälzlager oder Magnetlager ausgebildet werden kann. Für das beschriebene Anwendungsbeispiel ist es günstig, dass die radiale Lagerung ein Gleitlager ist.

Ein weiterer Vorteil der vorliegenden Erfindung ist, dass die Verschlusseinrichtung eine Rotationsachse und eine Längsachse aufweist, die parallel zueinander verlaufen. Durch diese Ausrichtung der Rotationsachse kann die erfindungsgemäße Verschlusseinrichtung konstruktiv einfacher an den Umfangsflansch eines vorhandenen Rohres angeschlossen werden.

Ein weiterer Vorteil der vorliegenden Erfindung ist, dass die Rotationsachse und die Längsachse der Verschlusseinrichtung zusammenfallen. Dadurch wird ermöglicht, dass die Symmetrie der Verschlusseinrichtung und der Rohranschlüsse, zwischen denen die Verschlusseinrichtung eingesetzt wird, im Wesentlichen übereinstimmen können. Vorhandene Normen einfach können erfüllt werden.

Ein weiterer Vorteil der vorliegenden Erfindung ist, dass die Verschlusseinrichtung im Wesentlichen als ein Rohrstück ausgebildet ist. Dadurch wird es leicht möglich, die erfindungsgemäße Absperrvorrichtung mit der Verschlusseinrichtung an ein Rohranschlussstück anzuschließen.

Ein weiterer Vorteil der vorliegenden Erfindung ist, dass der erste Strömungsquerschnitt und der zweite Strömungsquerschnitt vorzugsweise formgleich sind. Durch die Formgleichheit der beiden Strömungsquerschnitte kann die Absperrwand den ersten Strömungsquerschnitt vollständig freigeben oder verschließen.

Ein weiterer Vorteil der vorliegenden Erfindung ist, dass das wenigstens eine Rohranschlussstück und das Rohrstück vorzugsweise jeweils einen runden Rohrquerschnitt aufweisen. Diese sind üblich und regelmäßig auch genormt, so dass die für die Absperrvorrichtung einzusetzenden Geometrien in einfacher Weise auf solche in der Regel genormten Rohrquerschnitte abgestimmt werden können.

Ein weiterer Vorteil der vorliegenden Erfindung ist, dass an der Verschlusseinrichtung eine Stelleinrichtung angeordnet ist, mit der die Verschlusseinrichtung um die Rotationsachse in Drehung versetzbar ist. Eine solche Stelleinrichtung kann eine rein mechanische Einrichtung sein, zum Beispiel ein Griff oder ein Hebel, mit dem die Verschlusseinrichtung aus der Öffnungsstellung in die Schließstellung und umgekehrt gebracht werden kann. Auch eine motorische Variante der Stelleinrichtung ist denkbar.

Eine Ausführungsform der vorliegenden Erfindung wird im Folgenden anhand der Zeichnung näher beschrieben. Es zeigen:
- Fig. 1: eine schematische Explosionsansicht der erfindungsgemäßen Absperrvorrichtung;
- Fig. 2: eine schematische Ansicht der Absperrvorrichtung aus Fig. 1 im zusammengebauten Zustand;
- Fig. 3: eine schematische Ansicht der Absperrvorrichtung aus Fig. 2 von vorne mit Blick auf den ersten und zweiten Strömungsquerschnitt in der Öffnungsstellung; und
- Fig. 4: eine Seitenansicht der erfindungsgemäßen Absperreinrichtung.

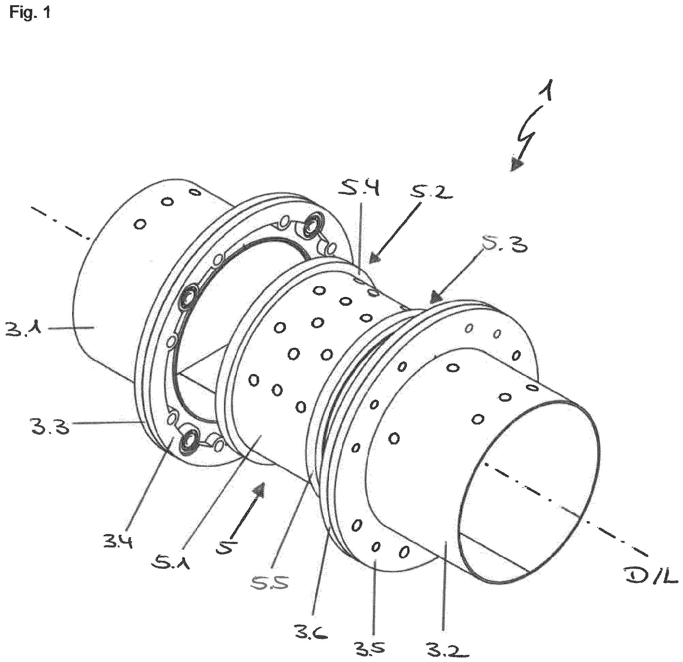

In Fig. 1 ist schematisch und perspektivisch eine Absperrvorrichtung 1 gemäß vorliegender Erfindung in einer Explosionsansicht dargestellt. Zwischen einem ersten Rohranschlussstück 3.1 und einem zweiten Rohranschlussstück 3.2 ist eine Verschlusseinrichtung 5 angeordnet. In der vorliegenden Ausführungsform hat das erste Rohranschlussstück 3.1 und das zweite Rohranschlussstück 3.2 einen runden Rohrquerschnitt. Die Verschlusseinrichtung 5 ist in der vorliegenden Ausführungsform im Wesentlichen als ein Rohrstück 5.1 ausgebildet. Auch das Rohrstück 5.1 weist in der vorliegenden Ausführungsform einen runden Rohrquerschnitt auf.

In anderen Ausführungsformen kann die Verschlusseinrichtung 5 in beliebiger anderer Art und Weise ausgebildet sein und können auch die Rohrquerschnitte des ersten Rohranschlussstücks 3.1, des zweiten Rohranschlussstücks 3.2 und/oder des Rohrstücks 5.1 auch unrund ausgebildet sein. Die in der Zeichnung dargestellte und im Folgenden beschriebene Ausführungsform stellt lediglich die bevorzugte Ausführungsform dar, wobei die Erfindung auch in beliebigen anderen Ausführungsformen, die weniger üblich sind, umgesetzt werden kann.

Das erste Rohranschlussstück 3.1 weist einen ersten Flansch 3.3 auf, an dem ein erster Lagerflansch 3.4 lösbar angebracht ist, z.B. durch Verschraubung. Ebenso weist das zweite Rohranschlussstück 3.2 einen zweiten Flansch 3.5 auf, an dem ein zweiter Lagerflansch 3.6 lösbar angebracht ist, z.B. durch Verschraubung. Das Rohrstück 5.1 der Verschlusseinrichtung 5 weist an einem ersten Rohrstückenden 5.2 und an einem zweiten Rohrstückende 5.3 jeweils ein ersten Kupplungsring 5.4 beziehungsweise einen zweiten Kupplungsring 5.5 auf. Mit dem ersten Kupplungsring 5.4 ist das erste Rohrstückende 5.2 im ersten Lagerflansch 3.4 des ersten Rohranschlussstücks 3.1 drehbar gelagert und mit dem zweiten Kupplungsring 5.5 ist das zweite Rohrstückende 5.3 in dem zweiten Lagerflansch 3.6 des zweiten Rohranschlussstücks 3.2 drehbar gelagert. Auf diese Weise ist die Verschlusseinrichtung 5 in der vorliegenden Ausführungsform an beiden Enden des Rohrstücks 5.1 radial gelagert. Die Lagerung an dem zweiten Rohstückende 5.3 kann in anderen Ausführungsformen auch anders ausfallen oder ganz entfallen, je nachdem, wie die stromaufwärtsliegende Anschlusssituation der Absperrvorrichtung 1 beschaffen ist.

In der vorliegenden Ausführungsform ist das Rohrstück 5.1 um eine Drehachse drehbar, die im Wesentlichen mit einer Längsachse des ersten Rohranschlussstücks 3.1 und auch des Rohrstücks 5.1 zusammenfällt.

In der vorliegenden Ausführungsform bildet das erste Rohranschlussstück 3.1 einen ersten Strömungsquerschnitt 7.1. Der erste Strömungsquerschnitt 7.1 in dem ersten Rohranschlussstück 3.1 bildet nur einen Teilquerschnitt des Rohrinnenquerschnitts des ersten Rohranschlussstücks 3.1. Bei der in der vorliegenden Ausführungsform runden Querschnittsform bildet in Fig. 1 nur eine Flächenhälfte des Rohrinnenquerschnitts den ersten Strömungsquerschnitt 7.1 des ersten Rohranschlussstücks 3.1. Die andere Flächenhälfte des Rohrinnenquerschnitts ist mittels wenigstens einer Materialwand 7.2 verschlossen. Das erste Rohanschlussstück 3.1 hat eine Abmessung, die es zulässt, dass der halbe Rohrinnenquerschnitt den ersten Strömungsquerschnitt 7.1 bilden kann, ohne dass der erste Strömungsquerschnitt 7.1 für ein vorbestimmtes Strömungsvolumen einen Engpass bildet. Der erste Strömungsquerschnitt 7.1 ist auf das vorgegebene Strömungsvolumen abgestimmt und an dieses angepasst.

Die Verschlusseinrichtung 5 weist einen zweiten Strömungsquerschnitt 7.3 auf, der in der vorliegenden Ausführungsform in seiner Geometrie und Abmessung dem ersten Strömungsquerschnitt 7.1 im ersten Rohranschlussstück 3.1 entspricht. Bei im Wesentlichen gleichen Maßen und Bauformen bildet auch der zweite Strömungsquerschnitt 7.3 eine Flächenhälfte eines Rohrquerschnitts des Rohrstücks 5.1. Die andere Flächenhälfte der Verschlusseinrichtung 5 ist durch eine Absperrwand 7.4, zum Beispiel auch eine Materialwand, verschlossen. Ein Strömungsweg eines Mediums durch die Absperrvorrichtung 1 in der Öffnungsstellung erstreckt sich von dem zweiten Rohranschlussstück 3.2 in Richtung des ersten Rohranschlussstücks 3.1 und verläuft durch das Rohrstück 5.1 der Verschlusseinrichtung 5. In der vorliegenden Ausführungsform bilden die jeweiligen unteren Flächenhälften der beteiligten Rohrquerschnitte den jeweils ersten bzw. zweiten Strömungsquerschnitt 7.1 bzw. 7.3.

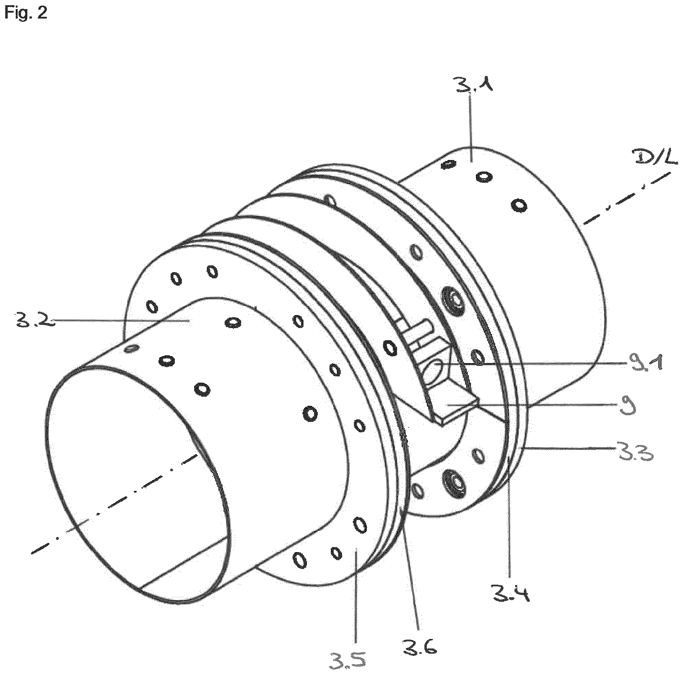

In Fig. 2 ist die erfindungsgemäße Absperrvorrichtung 1 im zusammengebauten Zustand dargestellt. An dem Rohrstück 5.1 ist eine Stelleinrichtung 9 angebracht, die in der vorliegenden Ausführungsform eine Durchstecköffnung 9.1 für einen Stab oder ein Rohr (nicht dargestellt) aufweist. Ein solches Werkzeug kann als Hilfsmittel verwendet werden, um die Verschlusseinrichtung 5 aus der Öffnungsstellung in die Schließstellung oder umgekehrt zu bringen. Zu diesem Zweck wird die Stelleinrichtung 9 und mit dieser das radial und drehbar gelagerte Rohrstück 5.1 um etwa 180° gedreht. In der Öffnungsstellung fluchten der erste Strömungsquerschnitt 7.1 des ersten Rohranschlussstücks 3.1 und der zweite Strömungsquerschnitt 7.3 des Rohrstücks 5.1. Nach einer Drehung des Rohrstücks 5.1 um 180°, gelangt die Absperrwand 7.4 an die Position, in der sich in der Öffnungsstellung der zweite Strömungsquerschnitt 7.3 fluchtend mit dem ersten Strömungsquerschnitt 7.1 befand. Die Absperrwand 7.4 wird also in einer Drehbewegung der Verschlusseinrichtung 5 vor den ersten Strömungsquerschnitt 7.1 geschoben und versperrt den Zugang zu dem ersten Strömungsquerschnitt (7.1).

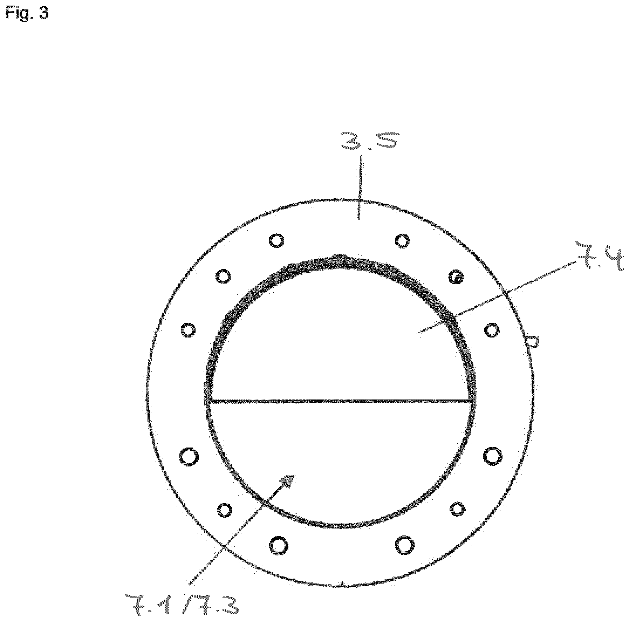

In Fig. 3 ist schematisch die Öffnungsstellung der Absperreinrichtung 1 dargestellt. In der oben liegenden Flächenhälfte des Rohrquerschnitts befinden sich der erste Strömungsquerschnitt 7.1 und der zweite Strömungsquerschnitt 7.3 in fluchtender Ausrichtung, so dass ein Medium frei hindurchströmen kann. Die Absperrwand 7.4 ist in der unteren Flächenhälfte des Rohrquerschnitts angeordnet. Wenn die Verschlusseinrichtung 5 bzw. das radial gelagerte Rohrstück 5.1 über die Stelleinrichtung 9 betätigt und um etwa 180° in die Schließstellung gedreht wird, gelangt die Absperrwand 7.4 nach oben und überdeckt die Flächenhälfte des ersten Strömungsquerschnitts 7.1, so dass dieser verschlossen ist. Da die untere Flächenhälfte des ersten Rohranschlussstücks 3.1 ebenfalls durch eine Materialwand (7.2) verschlossen ist, ist der Strömungsweg eines Mediums in der Schließstellung vollständig versperrt. Eine durch die Stelleinrichtung 9 initiierte Öffnungsbewegung erfolgt in der vorliegenden Ausführungsform gegen den Uhrzeigersinn und eine Schließbewegung entsprechend im Uhrzeigersinn. In anderen Ausführungsformen kann das auch umgekehrt erfolgen, also Öffnungsbewegung im Uhrzeigersinn und Schließbewegung gegen den Uhrzeigersinn.

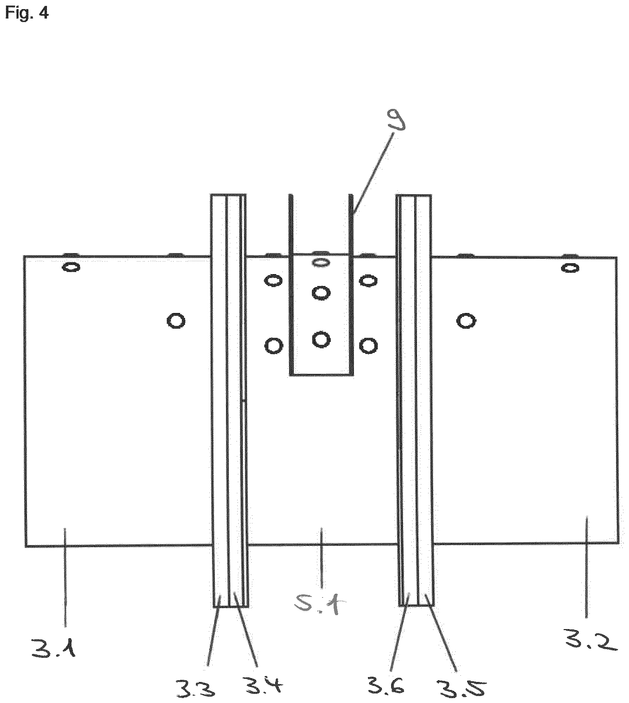

In Fig. 4 ist schematisch die Absperrvorrichtung (1) in einer Seitenansicht dargestellt.

### Bezugszeichenliste

- 1: Absperrvorrichtung
- 3.1: erstes Rohranschlussstück
- 3.2: zweites Rohranschlussstück
- 3.3: erster Flansch
- 3.4: erster Lagerflansch
- 3.5: zweiter Flansch
- 3.6: zweiter Lagerflansch
- 5: Verschlusseinrichtung
- 5.1: Rohrstück
- 5.2: erstes Rohrstückende
- 5.3: zweites Rohrstückende
- 5.4: erster Kupplungsring
- 5.5: zweiter Kupplungsring
- 7.1: erster Strömungsquerschnitt
- 7.2: Materialwand
- 7.3: zweiter Strömungsquerschnitt
- 7.4: Absperrwand
- 9: Stelleinrichtung
- 9.1: Durchstecköffnung
- D: Drehachse
- L: Längsachse

## Patentansprüche

1. Absperrvorrichtung (1) zum Unterbrechen eines Strömungsweges in einem Rohr mit wenigstens einem ersten Rohranschlussstück (3.1), mit einem ersten Strömungsquerschnitt (7.1), mit einer Verschlusseinrichtung (5), die zwischen einer Öffnungsstellung, in welcher der Strömungsweg frei ist, und einer Schließstellung, in welcher der Strömungsweg versperrt ist, bewegt werden kann, wobei die Verschlusseinrichtung (5) radial drehbar gelagert ist und einen um eine Absperrwand (7.4) reduzierten zweiten Strömungsquerschnitt (7.3) aufweist, wobei der erste Strömungsquerschnitt (7.1) in der Öffnungsstellung mit dem zweiten Strömungsquerschnitt (7.3) wenigstens teilweise fluchtet und in der Schließstellung durch die Absperrwand (7.4) versperrt ist, wobei die Verschlusseinrichtung (5) eine Drehachse (D) und eine Längsachse (L) aufweist, die parallel zueinander verlaufen, wobei die Drehachse (D) und die Längsachse (L) der Verschlusseinrichtung (5) zusammenfallen, **dadurch gekennzeichnet, dass** die Verschlusseinrichtung (5) im Wesentlichen als ein Rohrstück (5.1) ausgebildet ist, und dass an der Verschlusseinrichtung (5) eine Stelleinrichtung (9) angeordnet ist, mit der die Verschlusseinrichtung (5) um die Drehachse (D) in Drehung versetzt werden kann.

2. Absperrvorrichtung nach Anspruch 1,
**dadurch gekennzeichnet,**
**dass** die Absperrwand (7.4) in dem Rohrstück (5.1) ausgebildet ist und eine Geometrie aufweist, die einer Flächenhälfte eines Rohrstückquerschnitts entspricht.

3. Absperrvorrichtung nach Anspruch 1 oder 2,
**dadurch gekennzeichnet,**
**dass** der erste Strömungsquerschnitt (7.1) und der zweite Strömungsquerschnitt (7.3) formgleich sind.

4. Absperrvorrichtung nach einem der vorstehenden Ansprüche, **dadurch gekennzeichnet,**
**dass** das wenigstens erste Rohranschlussstück (3.1) und das Rohrstück (5.1) jeweils einen runden Rohrquerschnitt aufweisen.

5. Absperrvorrichtung nach einem der vorstehenden Ansprüche, **dadurch gekennzeichnet,**
**dass** die Verschlusseinrichtung (5) zwischen dem ersten Rohranschlussstück (3.1) und einem zweiten Rohranschlussstück (3.2) angebracht ist.

6. Absperrvorrichtung nach Anspruch 5,
**dadurch gekennzeichnet,**
**dass** das zweite Rohranschlussstück (3.2) einen zweiten Flansch (3.5) aufweist.

7. Absperrvorrichtung nach einem der vorstehenden Ansprüche, **dadurch gekennzeichnet,**
**dass** das Rohrstück (5.1) der Verschlusseinrichtung (5) an einem ersten Rohrstückende (5.2) einen ersten Kupplungsring (5.4) aufweist, der an dem ersten Flansch (3.3) mit einem ersten Lagerflansch (3.4) zusammenwirkt.

8. Absperrvorrichtung nach Anspruch 6 oder 7,
**dadurch gekennzeichnet,**
**dass** das Rohrstück (5.1) der Verschlusseinrichtung (5) an einem zweiten Rohrstückende (5.3) einen zweiten Kupplungsring (5.5) aufweist, der an dem zweiten Flansch (3.5) mit einem zweiten Lagerflansch (3.6) zusammenwirkt.

9. Absperrvorrichtung nach einem der vorstehenden Ansprüche, **dadurch gekennzeichnet,**
**dass** die Verschlusseinrichtung (5) mit dem wenigstens ersten Rohranschlussstück (3.1) über ein Lager, ausgewählt aus der Gruppe Gleitlager, Wälzlager, Magnetlager, verbunden ist.

## Claims

1. Shut-off device (1) for interrupting a flow path in a pipe, with at least one first pipe fitting (3.1), with a first flow cross-section (7.1), with a closure device (5), which can be moved between an opening position, in which the flow path is open, to a closing position in which the flow path is blocked,
wherein the closure device (5) is borne in a radially rotatable manner and has second flow cross-section (7.3) reduced by a shut-off wall (7.4), wherein in the opening position the first flow cross-section (7.1) at least partially aligns with the second flow cross-section (7.3) and in the closing position is blocked by the shut-off wall (7.4), wherein the closure device (5) comprises an axis of rotation (D) and a longitudinal axis (L) which are in parallel to each other, wherein the axis of rotation (D) and the longitudinal axis (L) of the closure device (5) coincide, **characterised in that** the closure device (5) is essentially designed as a pipe section (5.1) and **in that** arranged on the closure device (5) is an actuating device (9) with which the closure device (5) can be made to rotate about the axis of rotation (D).

2. Shut-off device according to claim 1,
**characterised in that**
the shut-off wall (7.4) is in the pipe section (5.1) and has a geometry that corresponds to
half of the surface of a pipe section cross-section.

3. Shut-off device according to claim 1 or 2,
**characterised in that**
the first flow cross-section (7.1) and the second flow cross-section (7.3) are of the same shape.

4. Shut-off device according to any one of the preceding claims,
**characterised in that**
the at least one pipe fitting (3.1) and the pipe section (5.1) each have a round pipe cross-section.

5. Shut-off device according to any one of the preceding claims,
**characterised in that** the closure device (5) is arranged between the first pipe fitting (3.1) and a second pipe fitting (3.2).

6. Shut-off device according to claim 5,
**characterised in that**
the second pipe fitting (3.2) has a second flange (3.5).

7. Shut-off device according to any one of the preceding claims,
**characterised in that**
at a first pipe section end (5.2), the pipe section (5.1) of the closure device (5) has a first coupling ring (5.4) which interacts with a first bearing flange (3.4) on the first flange (3.3).

8. Shut-off device according to claim 6 of 7,
**characterised in that**
at a second pipe section end (5.3), the pipe section (5.1) of the closure device (5) has a second coupling ring (5.5) which interacts with a second bearing flange (3.6) on the second flange (3.5).

9. Shut-off device according to any one of the preceding claims,
**characterised in that**
the closure device (5) is connected to the at least first pipe fitting (3.1) by means of a bearing selected from the group sliding bearing, roller bearing, magnetic bearing.

## Revendications

1. Dispositif d'obturation (1) pour interrompre une voie d'écoulement dans un tuyau avec au moins un premier raccord de tuyau (3.1), avec une première section transversale d'écoulement (7.1), avec un système de fermeture (5), qui peut être déplacé entre une position d'ouverture, dans laquelle la voie d'écoulement est libre, et une position de fermeture, dans laquelle la voie d'écoulement est obstruée,
sachant que le système de fermeture (5) est logé pouvant radialement tourner et comporte une deuxième section transversale d'écoulement (7.3) réduite autour d'une paroi d'obturation (7.4), sachant que la première section transversale d'écoulement (7.1) est alignée dans la position d'ouverture au moins en partie avec la deuxième section transversale d'écoulement (7.3) et est obstruée dans la position de fermeture par la paroi d'obstruction (7.4), sachant que le système de fermeture (5) comporte un axe de rotation (D) et un axe longitudinal (L), qui passent parallèlement l'un à l'autre, sachant que l'axe de rotation (D) et l'axe longitudinal (L) coïncident avec le système de fermeture (5), **caractérisé en ce que** le système de fermeture (5), est constitué pour l'essentiel sous la forme d'un élément de tuyau (5.1) et **en ce qu'**un système de réglage (9) est disposé sur le système de fermeture (5) avec lequel le système de fermeture (5) peut être déplacé en rotation autour de l'axe de rotation (D).

2. Dispositif d'obturation selon la revendication 1, **caractérisé en ce que**
la paroi d'obturation (7.4) est constituée dans l'élément de tuyau (5.1) et comporte une géométrie, qui correspond à une moitié de surface d'une section transversale d'élément de tuyau.

3. Dispositif d'obturation selon la revendication 1 ou 2, **caractérisé en ce que**
la première section transversale d'écoulement (7.1) et la deuxième section transversale d'écoulement (7.3) sont de forme identique.

4. Dispositif d'obturation selon l'une quelconque des revendications précédentes,
**caractérisé en ce qu'**
au moins le premier raccord de tuyau (3.1) et l'élément de tuyau (5.1) comportent respectivement une section transversale de tuyau ronde.

5. Dispositif d'obturation selon l'une quelconque des revendications précédentes,
**caractérisé en ce que**
le système de fermeture (5) est placé entre le premier raccord de tuyau (3.1) et un deuxième raccord de tuyau (3.2) .

6. Dispositif d'obturation selon la revendication 5, **caractérisé en ce que**
le deuxième raccord de tuyau (3.2) comporte une deuxième bride (3.5).

7. Dispositif d'obturation selon l'une quelconque des revendications précédentes,
**caractérisé en ce que**
l'élément de tuyau (5.1) du système de fermeture (5) comporte à une première extrémité d'élément de tuyau (5.2) une première bague d'accouplement (5.4), qui coopère sur la première bride (3.3) avec une première bride de palier (3.4) .

8. Dispositif d'obturation selon la revendication 6 ou 7, **caractérisé en ce que**
l'élément de tuyau (5.1) du système de fermeture (5) comporte à une deuxième extrémité d'élément de tuyau (5.3) une deuxième bague d'accouplement (5.5), qui coopère sur la deuxième bride (3.5) avec une deuxième bride de palier (3.6) .

9. Dispositif d'obturation selon l'une quelconque des revendications précédentes,
**caractérisé en ce que**
le système de fermeture (5) est relié au moins au premier raccord de tuyau (3.1) par le biais d'un palier, choisi à partir du groupe : palier lisse, palier à roulement, palier magnétique.
